(19)

Europäisches Patentamt

European Patent Office

Office européen des brevets

(11) **EP 3 781 998 B1**

(12) **EUROPEAN PATENT SPECIFICATION**

(45) Date of publication and mention of the grant of the patent:
**19.10.2022 Bulletin 2022/42**

(21) Application number: **19726155.5**

(22) Date of filing: **19.04.2019**

(51) International Patent Classification (IPC):
**G05B 19/4067** *(2006.01)*    **B65B 19/28** *(2006.01)*
**A24C 5/00** *(2020.01)*

(52) Cooperative Patent Classification (CPC):
**G05B 19/4067;** B65B 19/28; G05B 2219/14115;
G05B 2219/45048

(86) International application number:
**PCT/IB2019/053272**

(87) International publication number:
**WO 2019/202568 (24.10.2019 Gazette 2019/43)**

(54) **METHOD TO RESTORE THE FUNCTIONAL STATE OF AN AUTOMATIC MACHINE FOR THE PRODUCTION OF TOBACCO INDUSTRY ARTICLES**

VERFAHREN ZUR WIEDERHERSTELLUNG DES FUNKTIONSZUSTANDES EINER AUTOMATISCHEN MASCHINE ZUR HERSTELLUNG VON ARTIKELN DER TABAKVERARBEITENDEN INDUSTRIE

PROCÉDÉ DE RESTAURATION DE L'ÉTAT FONCTIONNEL D'UNE MACHINE AUTOMATIQUE POUR LA PRODUCTION D'ARTICLES DE L'INDUSTRIE DU TABAC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2018  IT 201800004698**

(43) Date of publication of application:
**24.02.2021  Bulletin 2021/08**

(73) Proprietor: **G.D Società per Azioni**
**40133 Bologna (IT)**

(72) Inventors:
• **ZANNI, Paolo**
**40030 Casalecchio Di Reno (BO) (IT)**
• **SALMI, Stefano**
**40054 Budrio (BO) (IT)**

• **FEDERICI, Luca**
**Deceased (IT)**

(74) Representative: **Maccagnan, Matteo et al**
**Studio Torta S.p.A.**
**Via Viotti, 9**
**10121 Torino (IT)**

(56) References cited:
| | |
|---|---|
| **EP-A1- 0 463 360** | **EP-A1- 1 232 949** |
| **EP-A2- 0 606 649** | **DE-A1- 10 343 611** |
| **DE-A1-102006 007 623** | **DE-A1-102007 059 480** |
| **DE-A1-102008 013 400** | **DE-A1-102016 120 763** |
| **JP-A- 2009 090 383** | **US-A- 5 157 595** |
| **US-A1- 2016 033 962** | |

## Description

TECHNICAL FIELD

The present invention relates to a method to restore the functional state of an automatic machine for the production of tobacco industry articles.

The present invention finds advantageous application in restoring the functional state of an automatic packaging machine which produces packets of cigarettes, to which the following description will explicitly refer without thereby losing generality.

PRIOR ART

An automatic cigarettes packaging machine comprises a plurality of actuators which act on the articles to modify their shape, structure or position and each actuator can assume a plurality of different positions.

Generally, the actuators are electric motors or pneumatic cylinders and are connected in an integral manner to mechanical parts of different shapes and dimensions suitable to process the articles.

In the event of incorrect operation (possibly also due to an incorrect starting position following a technical intervention) two or more actuators can collide, and therefore can, in given cases, cause interference (mechanical clash) between the mechanical parts connected thereto, thus risking to cause breakage or damage of said mechanical parts or of the articles being processed.

At the start of the automatic machine (for example after a shutdown or at the first turn-on after installation) or in case of unexpected shutdown (for example breaking of the material or malfunction), the actuators can be found in undefined positions (i.e. not known to the controllers) following the manual intervention of an operator and require a method to restore the functional state through which the actuators must be arranged (actuated) in order to start the movement of the automatic machine.

In the case wherein mechanical interferences are possible between the actuators, the method to restore the functional state is generally carried out by an operator, who actuates, manually and at extremely reduced speeds for safety reasons, the individual actuators, so as to avoid collision of the same. This is usually a very long operation that affects the performance and recovery time (for example after a failure) of the automatic machine. Moreover, the restoration of the functional state of the automatic machine, in the case in which interferences between the various actuators occur, requires an expert operator, able to visually evaluate whether the mechanical parts connected to an actuator are about to collide with other mechanical parts connected to other actuators. Furthermore, there could be cases (with many actuators, hidden or interlocking) in which the complexity of the system cannot be managed by an operator who manually controls the actuators and consequently the automatic machine could be in an impasse or deadlock condition.

Patent Application EP1232949A1 discloses an automatic machine for processing cigarettes, wherein the rest positions of the various actuators are memorized and can be restored for resuming operation of the machine.

Patent Application EP0463360A1 discloses a machine for wrapping cigarette packs, wherein the packs are placed within pockets of a wheel (first actuator) and two welding actuators (second and third actuator) are welding the wrapping material sheet (cellophane).

Patent Application EP0606649A2 discloses a restoring method for the resumption of an NC machining program to resume the execution of the NC machining program after it has been stopped or interrupted.

Patent Application US2016033962A1 discloses an automated control system having a plurality of cooperating components (actuators and/or sensors) which simulates operation of the components by storing data representing states of the components and modifying the states over time, in order to mitigate risk to humans, increase production or improve quality and precision.

Patent document JP2009090383 discloses a method to easily returning a robot to the origin without increasing a load on a system when the robot is returned from a stop position to the operating origin position.

Patent document US5157595 discloses a system and method for controlling operation of a plurality of elements in an automated process, such as a production process, and indicating error conditions as they occur.

Patent document DE102008013400 discloses a method involving transmitting computer-aided track data-relevant areas of objects in a two dimensional pattern/table in a logic system, and representing an area, which is not collision-endangered, and a collision-endangered area in the two dimensional pattern/table. Locking areas of the objects are determined from the represented areas.

Patent document DE10343611 discloses a machine control arrangement for a grinding machine with a grinding head and a workpiece carrier that are moved in several direction relative to each other under the control of a processing unit with a memory. The memory has a predetermined data reservoir for a representation of the work space in digital elements. The digital coordinate elements for predefined tools and predefined workpieces are assigned collision parameters (0 or 1). To check if a desired movement path (P) will be collision free, the control unit checks the available collision parameters for digital elements on the path. Patent document DE102016120763 discloses a method and corresponding apparatus for collision-free motion planning of a first manipulator in a first working space and a second manipulator in a second working space, wherein the first and second working spaces at least partially overlap.

Patent document DE102007059480 discloses a method and corresponding apparatus for collision-free motion planning of a first manipulator in a first working space and a second manipulator in a second working space, wherein the first and second working spaces at least partially overlap.

Patent document DE102006007623 discloses a robot, in particular on an industrial or jointed robot, having at least two degrees of freedom of movement and a control unit for controlling a movement between an initial pose and a final pose (16). In order to equip a robot of this generic type with a control unit (12) which effectively prevents inadvertent collision of the robot with objects (64) in its working area, it is proposed that the control unit (12) have a memory unit (30) for storing a map (32) in which at least one interference contour (34) can be recorded

## DESCRIPTION OF THE INVENTION

The object of the present invention is to provide a method to restore the functional state of an automatic machine for complex system in which a path to restore the functional state is defined by using an optimization algorithm. The invention is defined in the appended claims.

## PREFERRED EMBODIMENTS OF THE INVENTION

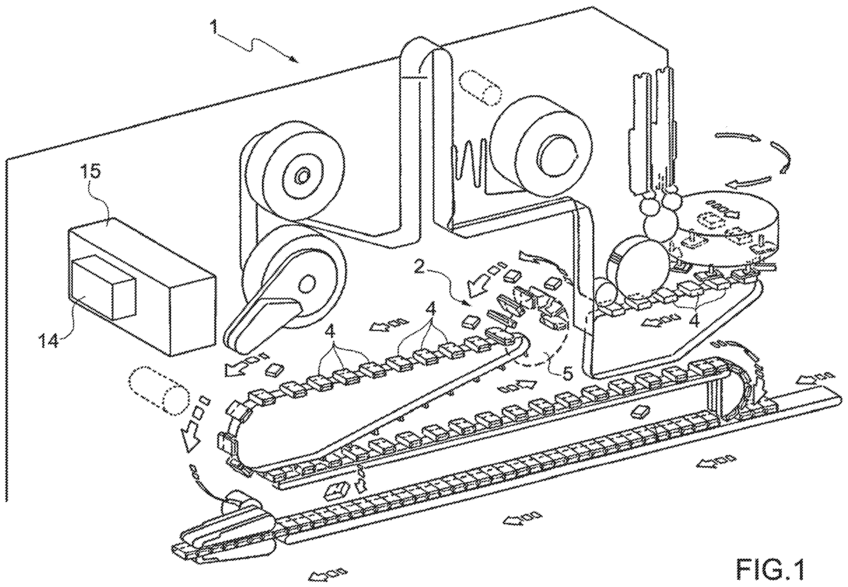

In Figure 1 an automatic machine 1 for the production of tobacco industry articles is illustrated, in particular an automatic packaging machine 1 for the application of a transparent overwrapping to packets of cigarettes. According to a first aspect of the present invention, a method to restore the functional state of at least one part of the automatic machine 1 is provided.

The automatic machine 1 comprises various parts suitable to carry out various processes on the articles (packets 4 of cigarettes in the embodiment illustrated in Figure 1). In particular, the automatic machine 1 comprises a part 2 provided with a set of (at least two) actuators 8 and 9, each of which is capable of assuming a plurality of different positions.

According to some preferred but non-limiting embodiments, the actuators 8 and 9 comprise electric motors (in particular of the *brushless* type). According to further embodiments not illustrated, the actuators 8 and 9 also comprise types of driving means other than electric motors (for example pneumatic or hydraulic cylinders, electrically actuated cylinders, etc.).

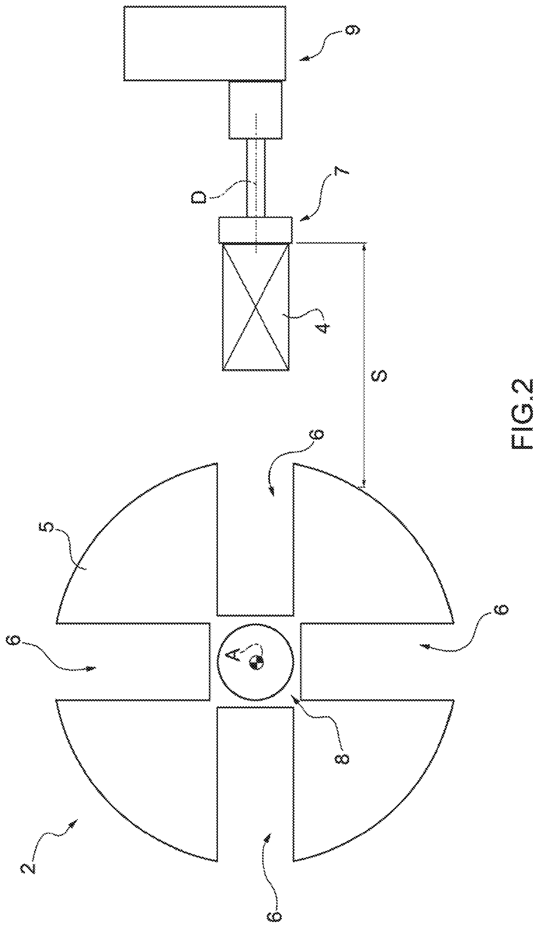

The part 2 of the automatic machine of Figure 1 is illustrated in plan and schematically in Figures 2, 3 and 4. Said part 2 comprises: a wheel 5 mounted in a rotatable manner about a central rotation axis A and provided with seats 6 (in particular pockets) suitable for receiving the packets 4 of cigarettes and (at least) a pusher 7 adapted to push the packets 2 inside the seats 6 of the movable wheel 5.

In the non-limiting embodiment illustrated in Figures 2, 3 and 4, two actuators 8 and 9 are present: a first actuator 8 is coupled to the wheel 5 to control the rotation of the wheel 5 around the rotation axis A and is provided with a rotating electric motor (for example of the brushless type) which rotates the wheel 5 by the interposition of a reducer (not illustrated); a second actuator 9 is coupled to the pusher 7 to control the linear movement of the pusher 7 along a direction D and for a predefined stroke S and is provided with a rotating electric motor (for example of the brushless type) and a reducer which transforms the circular movement into linear movement (alternatively the second actuator 9 could comprise a linear electric motor or a pneumatic/hydraulic cylinder).

The part 2 of the automatic machine 1 therefore has two actuators 8 and 9, which can generate interference positions (or interferences). With the terminology "interference positions" (or "interferences") we mean all those combinations of positions of the actuators 8 and 9 that generate collisions between the mechanical components of the automatic machine (for example between the wheel 5 and the pusher 7 and/or a packet 4 which is interposed between the wheel 5 and the pusher 7).

In some cases, an actuator 8 or 9 may be in positions which do not allow the other actuator 9 or 8 to move freely (that is, they do not allow the other actuator to assume any of its possible positions) as they would generate collisions.

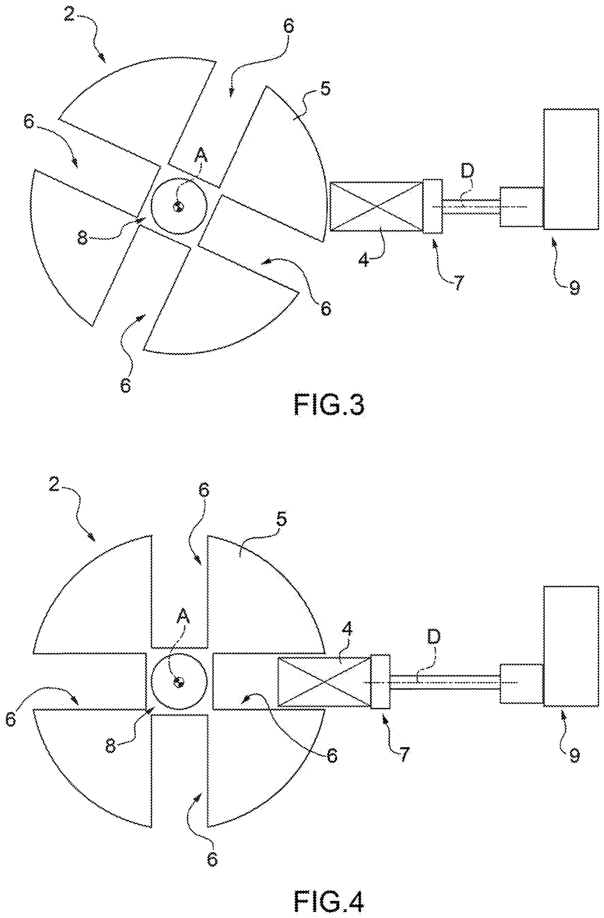

In Figure 3, the actuator 8 of the wheel 5 is in a position in which the pusher 7 is not allowed to enter with the product (the packet 4) in one of the seats 6. Accordingly, the actuator 9 of the pusher 7 cannot move freely (that is, it does not allow the pusher 7 to assume any of its possible positions along the stroke S) since it could generate a collision between the pusher 7 and the wheel 5, as the wheel 5 is in a position that is not suitable for inserting the packet 4 in the seat 6 by the pusher 7. In other words, given the position of the actuator 8 of the wheel 5, if the actuator 9 of the pusher 7 moves along its stroke S to try to insert the packet 4 inside one of the seats 6, the packet 4 first, and possibly the pusher 7 afterwards, would collide with the wheel 5, generating waste of material and a possible/probable breakage of mechanical components. However, this combination of positions of the actuators 8 and 9 allows free movement of the actuator 8 of the wheel 5, since by rotating the wheel 5 it would not cause any collision between the wheel 5 and the pusher 7 or a packet 4.

Instead, in other cases, an actuator 8 and 9 may be in positions which allow the other actuator 9 or 8 to move freely (that is, allow the other actuator 9 or 8 to assume any of its possible positions) without generating collisions.

As illustrated in Figure 4, the actuator 8 of the wheel 5 is in a position in which the pusher 7 is allowed to enter with the product (the packet 4) in one of the seats 6. Accordingly, the actuator 9 of the pusher 7 can move freely (that is, it can assume any of its possible positions) without generating any collision between the pusher 7 and the wheel 5, since the wheel 5 is in a position suitable for inserting the packet 4 in the seat 6 by the pusher 7. In other words, given the position of the actuator 8 of the wheel 5, if the actuator 9 of the pusher 7 moves along its stroke S, in order to insert the packet 4 inside one of the seats 6, it would not generate any collision between the packet 4 and/or the pusher 7 with the wheel 5. However, this combination of positions of the actuators 8 and 9 does not allow free movement of the actuator 8 of the wheel 5, since, by rotating the wheel 5, would either cause a collision between the wheel 5 and the packet 4, in the case where the packet 4 was only partially inserted in the seat 6, or would cause a collision between the wheel 5 and the pusher 7 in the case where the packet 4 was completely inserted and the pusher 7 was partially inside the seat 6. In both cases, it would be necessary to stop and restore the automatic machine 1 and in the second case a breakage of mechanical components would also be probable.

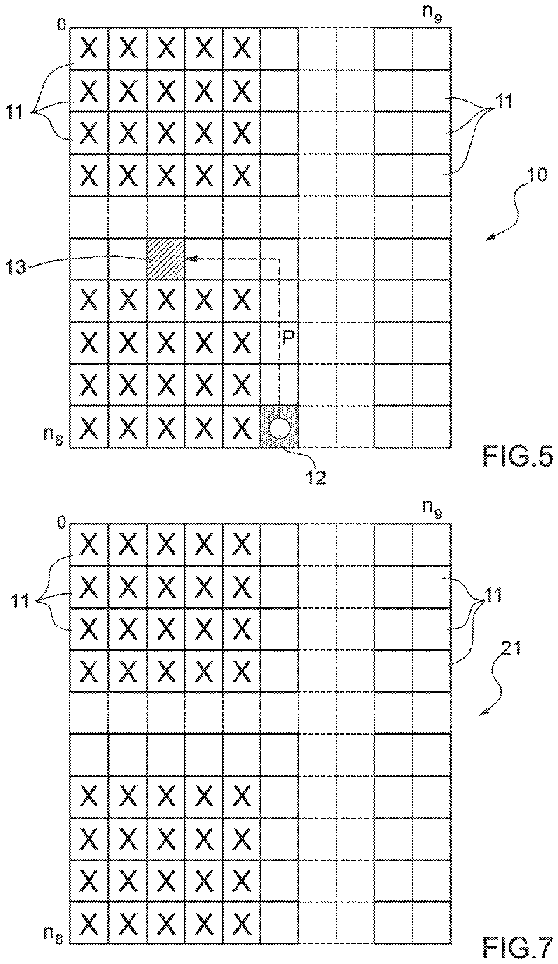

In Figure 5, number 10 denotes, as a whole, an interference matrix, which indicates, for each position of the two actuators 8 and 9 the presence or absence of interference positions (or interferences) with respect to all the possible positions of the other actuator. That is, in the interference matrix 10 all the possible positions (ns) of the actuator 8 of the wheel 5 are shown on the ordinate axis and all the possible positions (ng) of the actuator 9 of the pusher 7 are shown on the abscissa axis. In other words, the entire stroke of each actuator 8 or 9 is divided into a finite number of positions and this finite number of positions is arbitrary and depends on the desired degree of resolution: for example in the case of the actuator 8 of the wheel 5 a freedom of actuation is possible along the entire rotation angle and therefore the stroke of the actuator 8 can be divided into 360 positions (1° apart from one another), it can be divided into 72 positions (5° apart from one another ), or it can be divided into 720 positions (0.5° apart from one another); instead, in the case of the actuator 9 of the pusher 7, the stroke S can be divided into positions 1 mm apart from one another, in positions 1 cm apart from one another, in positions 0.2 mm apart from one another.... In the interference matrices 10 of the attached Figures some rows and some columns are shown with dashed lines, so as to indicate the possible presence of a different number of rows or columns as a function of the desired resolution for each actuator 8 and 9. Generally, the resolution used for each actuator 8 and 9 is approximately equal to the precision of the actuator 8 and 9 itself, i.e. it makes no sense to use a resolution of the order of microns if an actuator 8 or 9 has an accuracy of the order of centimetres and vice versa.

The interference matrix 10 is provided with a plurality of cells 11, each of which is therefore related to a pair of positions of the actuators 8 and 9, i.e. relative to a corresponding position of the actuator 8 associated with a corresponding position of the actuator 9. Given a position of the actuator 8 or 9, the interference matrix 10 defines, based on this position of the actuator 8 or 9, whether for each position of the actuator 9 or 8 (which together form a row or column of the interference matrix 10) an interference condition (position) between the mechanical parts in the part 2 of the automatic machine 1 occurs.

The interference matrix 10 therefore has a number of "n" cells 11 equal to the product of the number of positions of the actuators 8 and 9 (i.e. to the product between the number of rows and the number of columns). In particular, within each cell 11 a value "X" may be present or not present. The value "X" inside a cell 11 indicates that the relative pair of positions determines an interference (and that therefore that pair of positions is not allowed), since, if both actuators were found in those positions there would be a mechanical collision between mechanical elements (for example between wheel 5 and pusher 7) or between mechanical elements and an article (for example between the wheel 5 and a packet 4).

Obviously, the value "X" can be replaced by any other value, image or predefined symbol having the same function of providing information on the presence of interferences given the positions of the actuators 8 and 9.

According to the non-limiting embodiment illustrated in Figure 5, the absence of the value "X" inside a cell 11 indicates that the relative pair of positions of the two actuators 8 and 9 does not cause an interference. In other words, the absence of the "X" value inside a cell 11 determines that that pair of positions is allowed, since no element of the automatic machine 1 would inadvertently collide with another element.

The method to restore the functional state of the part 2 of the automatic machine 1 requires to determine, once, an interference matrix 10, which indicates, for each position of the actuator 8 the presence or absence of interference with respect to all the possible positions of the actuator 9 (and vice versa). The method further provides for the use of the interference matrix 10 to carry out the restoration of the functional state of the automatic machine 1 from a non-functional state to a functional state.

With "functional state" we mean a state in which the automatic machine 1 can undertake the production (directly or by a rephasing or homing method) or is already in production and, with "non-functional" state we mean a state in which the automatic machine 1 cannot directly undertake the production, but needs a method to restore the positions of each actuator 8 and 9 without their movements causing collisions due to (possible) interference positions.

Generally, a non-functional state occurs following a manual intervention by an operator when the automatic machine 1 is stopped (following an unexpected machine stop or following an automatic machine shutdown, for example during installation - *commissioning* -, or due to a period of inactivity of the machine, or even in the event of a power failure).

In Figure 5, the current position of the actuators 8 and 9 is denoted with number 12, while the final or desired position of the actuators 8 and 9 is denoted with number 13. The current (starting) position 12 belongs to a non-functional state, while the desired (*target*) position of the actuators 8 and 9 belongs to the functional state which causes the machine to be operative and to undertake the production cycle.

Advantageously but not necessarily, the method to restore the functional state envisages storing the interference matrix 10 in a memory 14 of a control unit 15 (schematically illustrated in Figure 1) of the automatic machine 1 which is suited to control the actuators 8 and 9.

According to some non-limiting embodiments, the step of storing the interference matrix 10 in the memory 14 of the control unit 15 takes place after the control unit 15 has processed the interference matrix 10 to be used for the method to restore the functional state.

According to other non-limiting embodiments, the step of storing the interference matrix 10 in the memory 14 of the control unit 15 takes place after the interference matrix 10 has been processed by a device external to the automatic machine 1. Consequently, the interference matrix 10 can also be processed off-line, without the need to be connected to the automatic machine 1. This feature can be very useful if a customer wishes to change format or implementations of the automatic machine 1 independently, since it would be possible to provide, even remotely, a new interference matrix 10 that is more adapted to the changes made.

The method to restore the functional state provides to process a set of movements which are executable by the actuators 8 and 9 in order to guide the automatic machine 1 from the non-functional state 12 to the functional state 13, causing none of the actuators 8 and 9 to pass, at any moment, through an interference position.

The set of movements is obtained by means of a path P defined on the interference matrix 10 by the current position 12 of the actuators, belonging to the non-functional state, to the final and desired position 13 of the actuators, belonging to the functional state. In other words, during this phase a path P (Figure 5) is defined within the interference matrix 10. This path P is defined by the set of movements that *steer* the automatic machine from the non-functional state (current position 12 of the actuators 8 and 9) to the functional state (desired position 13 of the actuators 8 and 9). In particular, the path P is formed by the set of movements made by the motors 8 and 9 through the positions allowed (those without the value "X") by the interference matrix 10. According to some non-limiting embodiments, the step of processing a set of movements which are executable by the actuators 8 and 9 takes place by the control unit 15 (or another control unit provided on-board the automatic machine 1) .

According to other non-limiting embodiments, the step of processing a set of movements which are executable by the actuators 8 and 9 takes place by means of a device external to the automatic machine 1. Consequently, the set of movements can also be processed off-line and subsequently downloaded onto the control units of the automatic machine 1, all of which, therefore, without the need to be connected to the automatic machine 1. This feature can be very useful in the case where a customer wishes to change format or implementations of the automatic machine 1 independently, since it would be possible to provide, even remotely, (instead of the new interference matrix 10) a new set of movements executable by the actuators 8 and 9 that is more adapted to the changes made.

Advantageously but not necessarily, the path P is defined using optimization algorithms, in particular, shortest path algorithms (such as: D*, A*, Dijkstra or others). Said algorithms are generally known and consist in calculating the path (in this case from the current position 12 to the final position 13) so as to minimize a particular cost function (for example distance or time or energy consumption). In this way, therefore, it is possible to improve the time for restoring the functional state of the automatic machine 1.

According to some non-limiting embodiments, the path P is defined using the Dijkstra's algorithm of searching for the shortest paths (*routing*).

According to other non-limiting and not illustrated embodiments, the path P is defined using trajectories derived from interpolation functions, polynomial functions, trigonometric functions or splines. Even more particularly, these trajectories are of the fifth or of the seventh order, so as to ensure continuity respectively of the acceleration or the *jerk* of the actuators 8 and 9.

Advantageously but not necessarily, the method provides for driving (actuating) the actuators 8 and 9 according to the set of movements (path P) to guide the automatic machine 1 from the non-functional state to the functional state. According to some non-limiting embodiments, this step is performed directly by the control unit 15 once the interference matrix 10 has been acquired. According to other non-limiting embodiments, this step is carried out by a further control unit (for example an electric drive) which drives the actuators 8 and 9 on the basis of an interference matrix 10 which is transmitted by the control unit 15.

Advantageously but not necessarily, the step of determining the interference matrix 10 comprises the further steps of: estimating all the possible positions of each actuator 8 or 9 independently of the other actuator 9 or 8; and simulating the possible positions of each actuator 8 or 9 simultaneously with the positions of the other actuator 9 or 8. In this way, it is possible to define the interference matrix 10 already during the design step, even before the automatic machine 1 is assembled, wired and turned on. In particular, the estimate of the positions of each actuator 8 and 9, as well as the simultaneous simulation with the positions of the other actuator 9 or 8, are carried out by means of assisted programming systems (CAD - CAE). The assisted programming systems allow to simulate and develop automatic machines in three-dimensional virtual environments and are very widespread, consequently they can be used as a basis for defining interference positions.

According to some non-limiting embodiments, the interference matrix 10 distinguishes, for each actuator 8 or 9, the interference positions on the basis of a digital (binary) value, i.e. each of the cells 11 of the interference matrix 10 contains a corresponding digital (binary) value which can assume only the value "X" (presence of interference) or only the empty value (absence of interference).

According to other non-limiting embodiments, the interference matrix 10 distinguishes, for each actuator 8 or 9, the interference positions on the basis of an analogue value (that is, which can assume more than two values), i.e. each of the cells 11 of the interference matrix 10 contains a corresponding analogue value that can assume values comprised between a minimum value (complete absence of interference) and a maximum value (sure interference) and therefore can assume intermediate values that indicate a more or less possible/probable interference or quantify a "*safety distance*" from an interference. In particular, in this way it is possible to give a weight to the values inside the cells 11 on the basis of a predefined parameter (such as, for example, the distance from a possible collision position, in the event that safety is more important than performance).

According to further non-limiting embodiments, the interference matrix 10 distinguishes, for each actuator 8 or 9, the interference positions based on a combination of digital (binary) values and/or analogue values.

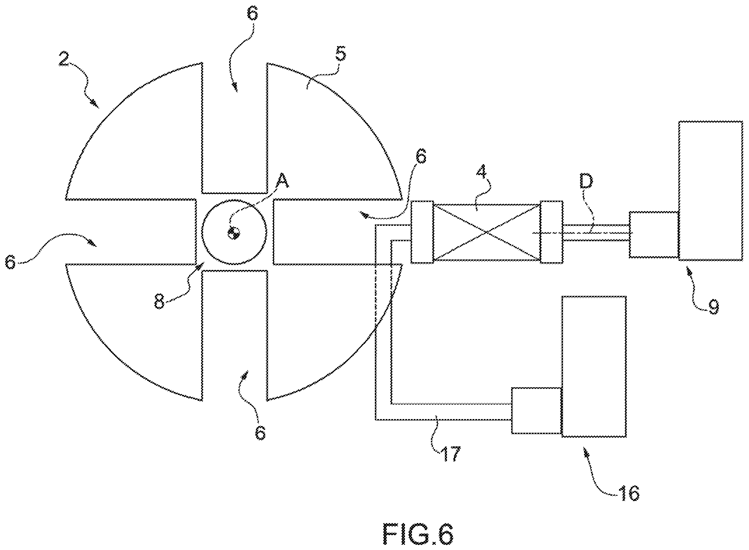

Obviously, the method described so far for simplicity with the only two actuators 8 and 9 is applied, in the same way, even in the case of three or more actuators: instead of using two-dimensional interference matrices 10, three or more dimensions interference matrices 10 are used. Figure 6 illustrates a non-limiting embodiment of the present invention wherein three actuators are provided: in addition to the previously described actuators 8 and 9 connected respectively to the wheel 5 and to the pusher 7, a further actuator 16 mechanically connected to a guiding element 17 is provided. The guiding element 17 is adapted to guide the packet of cigarettes 4, together with the pusher 7, inside the seat 6 (pocket) of the wheel 5. In this way, the correct orientation of the packet 4 is ensured during insertion and the packet 4 is prevented from jamming against the walls of the seat 6.

According to some non-limiting embodiments, the interference matrix has a dimension for each actuator 8, 9, 16. With reference to Figure 5, it can in fact be seen that the interference matrix 10 has two dimensions since only the actuators 8 and 9 are provided. In the case in which, as in the embodiment of Figure 6, three actuators 8, 9 and 16 are provided, the interference matrix (not illustrated) would be three-dimensional, with a dimension for each actuator 8, 9 or 16 indicating all the possible positions of the actuator 8, 9 or 16.

Therefore, in general, in the case in which the part 2 of the automatic machine 1 has "k" actuators, the relative interference matrix will have "k" dimensions. Defining as $n_i$ the number of possible positions of an i-th actuator (in the case of Figure 5 $n_8$ indicates the number of positions of the actuator 8 while $n_9$ indicates the number of positions of the actuator 9), the quantity Q of cells indicating positions of interference or non-interference will be equal to:

$$Q = \prod_{i=1}^{k} n_i$$

The number of positions of an i-th actuator $n_i$, can be less than or equal to the actual number of positions that the i-th actuator can assume. Obviously, the more $n_i$ is elevated, the greater the resolution of the method.

According to non-limiting and not illustrated embodiments of the present invention, the interference matrix 10 has a selective resolution variability by means of areas of different resolution. In other words, the interference matrix 10 has critical areas with a higher resolution than non-critical areas (with a lower resolution). The term "*critical areas*" refers to those portions (sets of cells 11) of the interference matrix 10 in the vicinity of interference areas (mechanical clash, obstacles, walls), while the term "*non-critical areas*" means those portions of the interference matrix 10 in which there is certainly no interference. Advantageously, but not necessarily, in critical areas, the resolution (that is, the difference in the positions of the actuators between two contiguous cells 11) is of the order of tenths of degree $O$ (0.1°), while in the non-critical areas, the resolution is of the order of tens of degrees $O$ (10°). By means of this selective resolution variability, the computational load that a control unit should undertake in the case of particularly and uniformly resolute interference matrices is strongly lightened.

According to some non-limiting embodiments, the positions of each actuator 8, 9 or 16 are limited to the number 360, so that the entire stroke S of the pusher 7, as well as a complete rotation of the wheel 5, are divided into 360 parts , so that the interference matrix 10 has 360 rows and 360 columns (in the case of a two-dimensional interference matrix 10) .

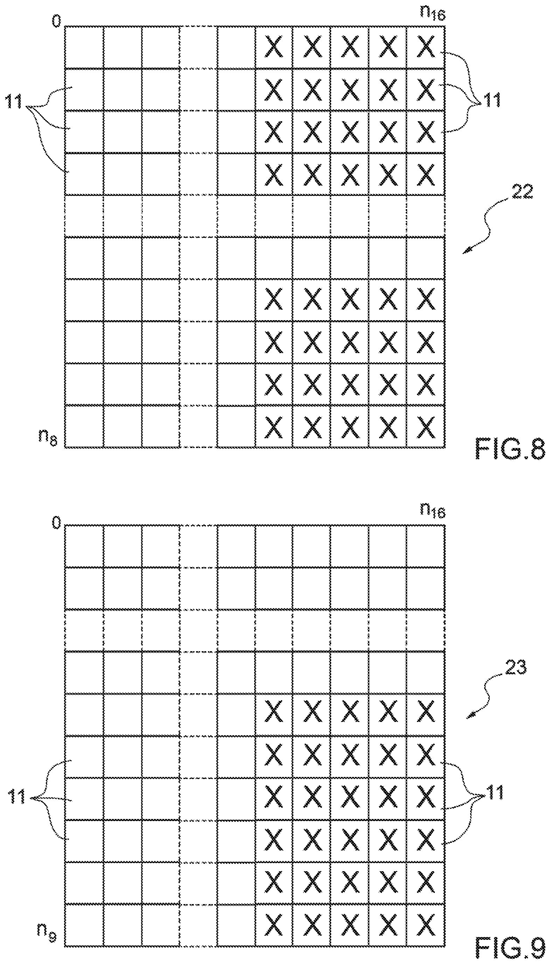

According to other non-limiting embodiments, the automatic machine 1 is divided into groups, each of which comprises a pair of actuators and for each group a corresponding two-dimensional interference matrix is defined. In the embodiment of Figure 6, three groups can therefore be identified: a first group formed by the actuators 8 and 9, a second group formed by the actuators 8 and 16, and a third group formed by the actuators 9 and 16. For each group the two-dimensional interference matrices 21, 22 and 23 are respectively defined, illustrated in Figures 7, 8 and 9.

According to some non-limiting embodiments, the two-dimensional interference matrices 21, 22 and 23 are used individually for defining possible sets of movements of the actuators 8, 9 and 16 with the same methods previously illustrated in the case of the interference matrix 10 only for the two actuators 8 and 9 (Figure 5). These are the cases, for example, in which only two actuators 8, 9 and 16 are in positions that risk causing interference, while the third actuator 8, 9 or 16 is in a position that does not obstruct the other actuators. In this way it is possible, in order to restore the automatic machine, to use only one of the two-dimensional interference matrices 21, 22 and 23 illustrated in Figures 7, 8 and 9.

According to further non-limiting embodiments, the two-dimensional interference matrices 21, 22 and 23 can be combined together to form an overall interference matrix.

According to a further aspect of the present invention, an automatic machine 1 is provided for the production of tobacco industry articles. The automatic machine 1 comprises the (or a plurality of) actuators 8 and 9, each capable of assuming a plurality of different positions, and a control unit 15 which is suitable to control the actuators. In particular, the control unit 15 comprises a memory 14 inside which the interference matrix 10 is stored, which indicates, for each position of an actuator 8 or 9 the presence or absence of interference with respect to all the possible positions of the other actuator.

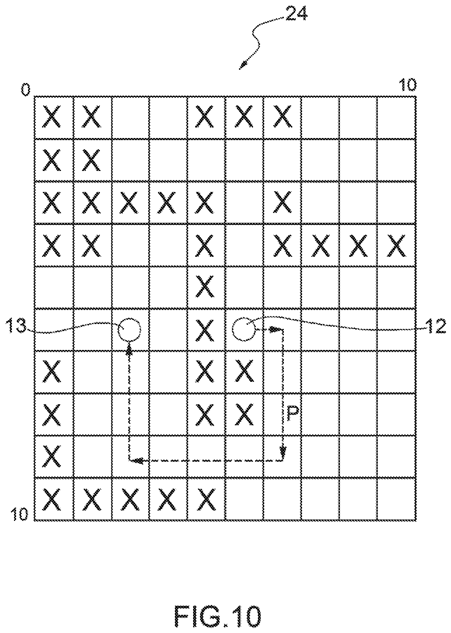

Figure 10 illustrates, by way of example, an interference matrix 24 of a complex system not illustrated. The interference matrix 24 of Figure 10 relates to two actuators, each capable of assuming ten different positions. This matrix therefore consists of a hundred cells 11, as it comprises ten rows and ten columns. In this interference matrix 24 an optimization algorithm was used, in particular an algorithm for finding the shortest paths. It is possible to note, in fact, that there is no shorter path that leads from the current position 12 to the final or desired position 13.

In the preferred and non-limiting embodiment illustrated in Figure 1, the articles of the tobacco industry processed by the automatic machine 1 are packets 4 of cigarettes. According to different embodiments not illustrated, the automatic machine 1 is of a different type (for example a packaging machine, a cellophane machine, or a packer machine) and therefore the articles are cigarettes, filter pieces, packets of tobacco, cigars, etc.

Although the invention described above makes particular reference to a very precise embodiment, it is not to be considered limited to this embodiment, since all its alternatives, modifications or simplifications which would be evident to the person skilled in the art, such as for example: the addition of further actuators, the use on another type of machine of the tobacco industry other than a packaging machine, the use of sets of movements generated with different trajectories or algorithms from those mentioned, etc.

The present invention has multiple advantages. First of all, it allows to restore the functional state of an automatic tobacco industry machine without the need for an experienced operator. Furthermore, the restoring of the functional state takes place automatically, in an extremely faster way than conventional methods. Finally, the method according to the present invention allows solving situations (with many hidden or interlocking actuators) in which the complexity of the system cannot be managed by an operator who manually controls the actuators and consequently the automatic machine avoids being in an impasse or deadlock, managing, in any case, to restore the functional state. Further advantages linked to the method according to the present invention relate to the possibility of calculating the interference matrices (and therefore the best paths for performing the reset from each position) offline, without therefore having to be connected to the automatic machine to perform this operation. In this way, it is possible to analyse, right from the design step, all the drawbacks linked to the possible interferences and critical positions of the mechanical parts connected to the actuators of the automatic machine. Moreover, being an automatic method based on flexible algorithms, it is possible to quickly change or calculate a new interference matrix (via software) during a format (or product) change, so as to allow the user to make structural changes to the machine, without affecting the possibility of automatically performing a restoring of the functional state (which generally fails with preloaded and non-dynamic functional state restoring methods). In other words, the use of interference matrices on which to apply algorithms for searching for the shortest paths (such as: D*, A*, Dijkstra or others) allows a control system (such as a motion controller - motion control - PTP generally used to control the actuators of an automatic machine) that does not know the details of the mechanics that actuates, to restore the functional state (i.e. to obtain the achievement of an operating position) without causing collisions between interference mechanical members.

**Claims**

1.  A method to restore the functional state of at least part (2) of an automatic machine (1) for the production of tobacco industry articles;

    the automatic machine (1) comprises a plurality of actuators (8, 9), each capable of assuming a plurality of different positions;
    the method comprises the steps of:

    determining, once, an interference matrix (10), which indicates, for each position of an actuator (8, 9), the presence or absence of interferences relative to all the possible positions of the other actuators (9, 8);
    using the interference matrix (10) to restore the automatic machine (1) from a non-functional state to a functional state; and

processing a set of movements which are executable by the actuators (8, 9) to guide the automatic machine (1) from a non-functional state to a functional state so that none of actuators (8, 9), in any moment, goes through an interference position; wherein a set of movements is obtained through a path (P) defined on the interference matrix (10) from a current position (12) of the actuators (8, 9), belonging to the non-functional state, to a final desired position (13) of the actuators (8, 9), belonging to the functional state.

2. The method according to claim 1 and comprising the further step of storing the interference matrix (10) in a memory (14) of a control unit (15) of the automatic machine (1), which is designed to control the actuators (8, 9).

3. The method according to claims 1 or 2, wherein the path (P) is defined using optimization algorithms, in particular shortest path algorithms.

4. The method according to claim 3, wherein the path (P) is defined using Dijkstra's algorithm.

5. The method according to claim 3, wherein the path (P) is defined using trajectories deriving from interpolation functions, in particular polynomial functions, trigonometric functions or splines.

6. The method according to one of the claims from 1 to 5 and comprising the further step of driving the actuators (8, 9) according to the set of movements so as to guide the automatic machine (1) from the non-functional state to the functional state.

7. The method according to any one of the preceding claims, wherein the step of determining an interference matrix (10) comprises the further steps of: estimating all the possible positions of each actuator (8, 9) independently of the other actuators (9, 8); and simulating the possible positions of each actuator (8, 9) simultaneously with the positions of the other actuators (9, 8).

8. The method according to any one of the preceding claims, wherein the interference matrix (10) has a dimension for each actuator (8, 9), indicating the possible positions of the actuator.

9. The method according to any one of the preceding claims, wherein:

the automatic machine (1) is divided into groups, each comprising a pair of actuators (8, 9, 16); and

a corresponding two-dimensional interference matrix (21, 22, 23) is defined for each group.

10. The method according to claim 8 and comprising the further step of combining the two-dimensional interference matrices (21, 22, 23) of the groups with one another so as to form a total interference matrix.

11. The method according to one of the claims from 1 to 9, wherein the interference matrix (10) distinguishes, for each actuator (8, 9), the interference positions based on one single binary value.

12. The method according to one of the claims from 1 to 9, wherein the interference matrix (10) distinguishes, for each actuator (8, 9), the interference positions based on one single analog value.

13. The method according to one of the claims from 1 to 9, wherein the interference matrix (10) distinguishes, for each actuator (8, 9), the interference positions based on a combination of digital or analog values.

14. An automatic machine for the production of tobacco industry articles; the automatic machine (1) comprises:

a plurality of actuators (8, 9), each capable of assuming a plurality of different positions; and a control unit (15), which is designed to control the actuators (8, 9) and comprises a memory (14); the automatic machine (1) is **characterized in that,** inside the memory (14), an interference matrix (10) is stored, which indicates, for each position of an actuator (8, 9), the presence or absence of interferences relative to all the possible positions of the other actuators (9, 8); the automatic machine (1) being adapted to carry out the method according to any one of the claims from 1 to 13.

**Patentansprüche**

1. Verfahren, um den funktionsgemäßen Zustand zumindest eines Abschnitts (2) einer automatischen Maschine (1) für die Produktion von Tabakindustrieerzeugnissen wiederherzustellen;

wobei die automatische Maschine (1) mehrere Aktoren (8, 9) umfasst, die jeweils in der Lage sind, mehrere verschiedene Positionen einzunehmen; wobei das Verfahren die Schritte umfasst:

einmaliges Bestimmen einer Beeinflussungsmatrix (10), die für jede Position eines Aktors (8, 9) das Vorhandensein oder Nichtvorhandensein von Beeinflussungen in Bezug auf alle möglichen Positionen der anderen Aktoren (9, 8) angibt;

Verwenden der Beeinflussungsmatrix (10), um die automatische Maschine (1) aus einem nicht funktionsgemäßen Zustand in einen funktionsgemäßen Zustand wiederherzustellen; und

Verarbeiten einer Menge von Bewegungen, die durch die Aktoren (8, 9) ausführbar sind, um die automatische Maschine (1) aus dem nicht funktionsgemäßen Zustand in einen funktionsgemäßen Zustand zu überführen, derart, dass zu jedem Zeitpunkt keiner der Aktoren (8, 9) eine Beeinflussungsposition durchläuft;

wobei eine Menge von Bewegungen durch einen Pfad (P) erhalten wird, der auf der Beeinflussungsmatrix (10) von einer aktuellen Position (12) der Aktoren (8, 9), die zu dem nicht funktionsgemäßen Zustand gehört, zu einer endgültigen, gewünschten Position (13) der Aktoren (8, 9), die zum funktionsgemäßen Zustand gehört, definiert wird.

2. Verfahren nach Anspruch 1, umfassend den weiteren Schritt des Speicherns der Beeinflussungsmatrix (10) in einem Speicher (14) einer Steuereinheit (15) der automatischen Maschine (1), die ausgelegt ist, die Aktoren (8, 9) zu steuern.

3. Verfahren nach Anspruch 1 oder 2, wobei der Pfad (P) unter Verwendung von Optimierungsalgorithmen, insbesondere von kürzesten Pfad-Algorithmen, definiert wird.

4. Verfahren nach Anspruch 3, wobei der Pfad (P) unter Verwendung eines Dijkstra-Algorithmus definiert wird.

5. Verfahren nach Anspruch 3, wobei der Pfad (P) unter Verwendung von Trajektorien, die sich aus Interpolationsfunktionen, insbesondere Polynomfunktionen, trigonometrischen Funktionen oder Spline-Funktionen, ableiten, definiert wird.

6. Verfahren nach einem der Ansprüche von 1 bis 5, und umfassend den weiteren Schritt des Antreibens der Aktoren (8, 9) gemäß der Menge von Bewegungen, um die automatische Maschine (1) aus dem nicht funktionsgemäßen Zustand in den funktionsgemäßen Zustand zu überführen.

7. Verfahren nach einem der vorhergehenden Ansprüche, wobei der Schritt des Bestimmens einer Beeinflussungsmatrix (10) die weiteren Schritte umfasst:

Abschätzen aller möglichen Positionen jedes Aktors (8, 9) unabhängig von den anderen Aktoren (9, 8); und

Simulieren der möglichen Positionen jedes Aktors (8, 9) gleichzeitig mit den Positionen der anderen Aktoren (9, 8).

8. Verfahren nach einem der vorhergehenden Ansprüche, wobei die Beeinflussungsmatrix (10) eine Dimension für jeden Aktor (8, 9) aufweist, die die möglichen Positionen des Aktors angibt.

9. Verfahren nach einem der vorhergehenden Ansprüche, wobei:

die automatische Maschine (1) in Gruppen unterteilt ist, die jeweils ein Paar Aktoren (8, 9, 16) umfassen; und

eine entsprechende zweidimensionale Beeinflussungsmatrix (21, 22, 23) für jede Gruppe definiert wird.

10. Verfahren nach Anspruch 8, und umfassend den weiteren Schritt des Kombinierens der zweidimensionalen Beeinflussungsmatrizen (21, 22, 23) der Gruppen miteinander, um so eine Gesamtbeeinflussungsmatrix zu bilden.

11. Verfahren nach einem der Ansprüche 1 bis 9, wobei die Beeinflussungsmatrix (10) für jeden Aktor (8, 9) die Beeinflussungspositionen auf der Grundlage eines einzigen binären Wertes unterscheidet.

12. Verfahren nach einem der Ansprüche 1 bis 9, wobei die Beeinflussungsmatrix (10) für jeden Aktor (8, 9) die Beeinflussungspositionen auf der Grundlage eines einzigen analogen Wertes unterscheidet.

13. Verfahren nach einem der Ansprüche 1 bis 9, wobei die Beeinflussungsmatrix (10) für jeden Aktor (8, 9) die Beeinflussungspositionen auf der Grundlage einer Kombination von digitalen und analogen Werten unterscheidet.

14. Automatische Maschine für die Produktion von Tabakindustrieerzeugnissen; wobei die automatische Maschine (1) umfasst:

mehrere Aktoren (8, 9), die jeweils in der Lage sind, mehrere verschiedene Positionen einzunehmen; und

eine Steuereinheit (15), die ausgelegt ist, die Aktoren (8, 9) zu steuern, und einen Speicher (14) umfasst;

wobei die automatische Maschine (1) **dadurch gekennzeichnet ist, dass** in dem Speicher (14) eine Beeinflussungsmatrix (10) gespeichert ist, die für jede Position eines Aktors (8, 9) das Vorhandensein oder Nichtvorhandensein von Beeinflussungen in Bezug auf alle möglichen Positionen der anderen Aktoren (9, 8) angibt; wobei die automatische Maschine (1) ausgelegt ist, das Verfahren nach einem der Ansprüche von 1 bis 13 auszuführen.

## Revendications

1. Méthode pour rétablir l'état fonctionnel d'au moins une partie (2) d'une machine automatique (1) pour la production d'articles de l'industrie du tabac ;

   la machine automatique (1) comprend une pluralité d'actionneurs (8, 9), chacun d'eux étant capable d'adopter une pluralité de positions différentes ;
   la méthode comprend les étapes suivantes :

   la détermination, une fois, d'une matrice d'interférences (10), qui indique, pour chaque position d'un actionneur (8, 9), la présence ou l'absence d'interférences par rapport à toutes les positions possibles des autres actionneurs (9, 8) ;
   l'utilisation de la matrice d'interférences (10) pour rétablir la machine automatique (1) d'un état non fonctionnel à un état fonctionnel ; et
   le traitement d'un ensemble de mouvements qui sont exécutables par les actionneurs (8, 9) pour guider la machine automatique (1) d'un état non fonctionnel à un état fonctionnel de sorte qu'aucun des actionneurs (8, 9), à aucun moment, ne passe par une position d'interférences ;
   dans laquelle un ensemble de mouvements est obtenu sur un trajet (P) défini sur la matrice d'interférences (10) depuis une position courante (12) des actionneurs (8, 9), appartenant à l'état non fonctionnel, jusqu'à une position souhaitée finale (13) des actionneurs (8, 9), appartenant à l'état fonctionnel.

2. Méthode selon la revendication 1 et comprenant l'étape supplémentaire du stockage de la matrice d'interférences (10) dans une mémoire (14) d'une unité de commande (15) de la machine automatique (1), qui est désignée pour commander les actionneurs (8, 9).

3. Méthode selon la revendication 1 ou 2, dans laquelle le trajet (P) est défini en utilisant des algorithmes d'optimisation, en particulier des algorithmes du trajet le plus court.

4. Méthode selon la revendication 3, dans laquelle le trajet (P) est défini en utilisant l'algorithme de Dijkstra.

5. Méthode selon la revendication 3, dans laquelle le trajet (P) est défini en utilisant des trajectoires découlant de fonctions d'interpolation, en particulier des fonctions polynomiales, des fonctions trigonométriques ou des fonctions splines.

6. Méthode selon l'une des revendications 1 à 5, et comprenant l'étape supplémentaire de l'entraînement des actionneurs (8, 9) en fonction de l'ensemble de mouvements de manière à guider la machine automatique (1) de l'état non fonctionnel à l'état fonctionnel.

7. Méthode selon l'une quelconque des revendications précédentes, dans laquelle l'étape de détermination d'une matrice d'interférences (10) comprend les étapes supplémentaires suivantes :

   l'estimation de toutes les positions possibles de chaque actionneur (8, 9) indépendamment des autres actionneurs (9, 8) ; et
   la simulation des positions possibles de chaque actionneur (8, 9) simultanément avec les positions des autres actionneurs (9, 8).

8. Méthode selon l'une quelconque des revendications précédentes, dans laquelle la matrice d'interférences (10) présente une dimension pour chaque actionneur (8, 9), indiquant les positions possibles de l'actionneur.

9. Méthode selon l'une quelconque des revendications précédentes, dans laquelle :

   la machine automatique (1) est divisée en groupes, chacun d'eux comprenant une paire d'actionneurs (8, 9, 16) ; et
   une matrice bidimensionnelle d'interférences correspondante (21, 22, 23) est définie pour chaque groupe.

10. Méthode selon la revendication 8 et comprenant l'étape supplémentaire de la combinaison des matrices bidimensionnelles d'interférences (21, 22, 23) des groupes l'une avec l'autre de manière à former une matrice d'interférences totale.

11. Méthode selon l'une des revendications 1 à 9, dans laquelle la matrice d'interférences (10) distingue, pour chaque actionneur (8, 9), les positions d'interférences sur la base d'une valeur binaire unique.

12. Méthode selon l'une des revendications 1 à 9, dans laquelle la matrice d'interférences (10) distingue, pour chaque actionneur (8, 9), les positions d'interférences sur la base d'une valeur analogique unique.

13. Méthode selon l'une des revendications 1 à 9, dans laquelle la matrice d'interférences (10) distingue, pour chaque actionneur (8, 9), les positions d'interférences sur la base d'une combinaison de valeurs numériques ou analogiques.

14. Machine automatique pour la production d'articles de l'industrie du tabac ; la machine automatique (1) comprend :

une pluralité d'actionneurs (8, 9), chacun d'eux étant capable d'adopter une pluralité de positions différentes ; et
une unité de commande (15), qui est conçue pour commander les actionneurs (8, 9) et comprend une mémoire (14) ;
la machine automatique (1) est **caractérisée en ce que**, à l'intérieur de la mémoire (14), il est stocké une matrice d'interférences (10) qui indique, pour chaque position d'un actionneur (8, 9), la présence ou l'absence d'interférences par rapport à toutes les positions possibles des autres actionneurs (9, 8) ; la machine automatique (1) étant apte à réaliser la méthode selon l'une quelconque des revendications 1 à 13.

FIG.1

EP 3 781 998 B1

FIG.2

FIG.3

FIG.4

FIG.6

FIG.5

FIG.7

FIG.8

FIG.9

FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1232949 A1
- EP 0463360 A1
- EP 0606649 A2
- US 2016033962 A1
- JP 2009090383 B
- US 5157595 A
- DE 102008013400
- DE 10343611
- DE 102016120763
- DE 102007059480
- DE 102006007623